(19) Europäisches Patentamt
European Patent Office
Office européen des brevets

(11) Veröffentlichungsnummer: **0 392 253 B1**

(12) **EUROPÄISCHE PATENTSCHRIFT**

(45) Veröffentlichungstag der Patentschrift: **05.01.94**

(51) Int. Cl.$^5$: **C04B 41/49**

(21) Anmeldenummer: **90105779.4**

(22) Anmeldetag: **27.03.90**

# (54) Zubereitung zur wasserabweisenden Imprägnierung poröser mineralischer Baustoffe.

(30) Priorität: **08.04.89 DE 3911479**

(43) Veröffentlichungstag der Anmeldung:
**17.10.90 Patentblatt 90/42**

(45) Bekanntmachung des Hinweises auf die Patenterteilung:
**05.01.94 Patentblatt 94/01**

(84) Benannte Vertragsstaaten:
**BE DE FR GB IT**

(56) Entgegenhaltungen:
**EP-A- 0 157 323**
**EP-A- 0 234 024**
**EP-A- 0 273 867**
**DE-A- 3 312 911**

(73) Patentinhaber: **Th. Goldschmidt AG**
**Goldschmidtstrasse 100**
**D-45127 Essen(DE)**

(72) Erfinder: **Schamberg, Eckehard, Dr.**
**Grotehang 6**
**D-4300 Essen(DE)**
Erfinder: **Koerner, Götz, Dr.**
**Kantorie 126**
**D-4300 Essen(DE)**
Erfinder: **Fritsch, Herwig**
**Theodor-Heuss-Strasse 111**
**D-4390 Gladbeck(DE)**
Erfinder: **Grasse, Manfred**
**Damaschkeweg 1**
**D-4750 Unna(DE)**
Erfinder: **Sucker, Roland**
**Berliner Strasse 69**
**D-4712 Werne(DE)**

**EP 0 392 253 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Zubereitung zur wasserabweisenden Imprägnierung poröser mineralischer Baustoffe auf der Basis von Alkoxygruppen enthaltenden siliciumorganischen Verbindungen.

Seit vielen Jahren werden Organosilane oder Organosiloxane zur Imprägnierung poröser mineralischer Baustoffe eingesetzt, um diese vor dem Eindringen von Wasser zu schützen. Bei dieser hydrophobierenden Behandlung ist es besonders wichtig, daß die Wirkstoffe tief in den Baustoff eindringen und sich mit dem Baustoff chemisch oder physikalisch verbinden.

Die Penetration in den Baustoff wird begünstigt, wenn man als siliciumorganische Wirkstoffe möglichst niedermolekulare Verbindungen verwendet. Die Eindringtiefe kann zusätzlich durch die Mitverwendung organischer Lösungsmittel verbessert werden, die nach der Behandlung des Baustoffes verdunsten. Hohe Reaktivität wird erreicht, wenn als siliciumorganische Verbindungen Organoalkoxysilane und/oder Organoalkoxysiloxane eingesetzt werden, die unter Einfluß von Feuchtigkeit kondensieren und mit dem Baustoff reagieren können. Dabei wird der der Alkoxygruppe entsprechende Alkohol abgespalten, der in die Atmosphäre verdunstet.

Aus der DE-PS 33 12 911 ist eine solche Zubereitung mit einem Gehalt an Organoalkoxysiloxanen der allgemeinen Formel

$$\begin{array}{c} R^1_a\text{-}Si\text{-}(OR^2)_b \\ | \\ O_{\frac{4-(a+b)}{2}} \end{array}$$

bekannt, wobei
$R^1$ ein Alkyl- oder Arylrest,
$R^2$ ein Alkylrest mit 1 bis 4 Kohlenstoffatomen,
a = 0,8 bis 1,5 und
b ≦ 2 ist.

Diese Zubereitung ist dadurch gekennzeichnet, daß sie aus

a) 1 bis 20 Gew.-% eines Gemisches von Organoalkoxysiloxanen der vorgenannten Formel, welches aus 25 bis 75 Gew.-% eines Siloxans, dessen Wert b = 0,1 bis 0,5 und 75 bis 25 Gew.-% eines Siloxans, dessen Wert b = 0,8 bis 2,0 ist, besteht, und wobei a + b ≦ 3 ist,
b) 80 bis 99 Gew.-% eines nicht mit Wasser mischbaren Lösungsmittels und
c) gegebenenfalls an sich bekannten Kondensationskatalysatoren

besteht.

Das wesentliche Merkmal dieser Zubereitung besteht somit darin, die Imprägnierung nicht mit einem Organoalkoxysiloxan durchzuführen, dessen Molekulargewichtsverteilung im wesentlichen nur ein einziges Maximum aufweist, sondern ein Gemisch von Organoalkoxysiloxanen zu verwenden, dessen Kennzeichen im unterschiedlichen Kondensationsgrad besteht. Hierdurch wird eine hohe Eindringtiefe, verbunden mit hoher Wirksamkeit, insbesondere auf alkalischen Baustoffen, und ein guter, optisch sichtbarer Wasserabperleffekt gewährleistet.

Die in der DE-PS 33 12 911 beschriebenen Zubereitungen haben sich in der Praxis bewährt. Eine Verbesserung dieser Zubereitungen ist im wesentlichen nur hinsichtlich der in der Praxis erreichbaren Eindringtiefe möglich. Diese Eindringtiefe wird im wesentlichen von drei Faktoren beeinflußt, nämlich den verwendeten Lösungsmitteln, der Porosität der Baustoffe und der Sorgfalt, mit der die Anwendung dieser Zubereitungen in der Praxis erfolgt. Verbesserte Zubereitungen zur Imprägnierung müssen daher insbesondere an ihrem Penetrationsverhalten gemessen werden.

Infolge des gestiegenen Umweltbewußtseins wird die Verwendung organischer Lösungsmittel zunehmend als störend empfunden. Man hat sich deshalb insbesondere bemüht, vergleichbare Zubereitungen auf wäßriger Basis zu entwickeln.

Weitere Entwicklungsarbeiten haben zu einem Verfahren geführt, das Gegenstand der DE-PS 36 27 060 ist. Diese Patentschrift betrifft ein Verfahren zum Imprägnieren von mineralischen Baustoffen, insbesondere Mauerwerk, mit wäßrigen Lösungen von Silanolen und/oder Siloxanolen, die am Ort ihrer Verwendung durch Hydrolyse von Alkoxysilanen und/oder Alkoxysiloxanen hergestellt werden, wobei man als Alkoxysilane und/oder Alkoxysiloxane Verbindungen der allgemeinen Formel

$$R^1_a Si(OR^2)_b \; O_{\frac{4-(a+b)}{2}}$$

| | |
|---|---|
| $R^1$ | = Alkylrest mit 1 bis 8 Kohlenstoffatomen, wobei im mittleren Molekül mindestens 90 % der Reste $R^1$ Alkylreste mit 1 bis 4 Kohlenstoffatomen sind, |
| $R^2$ | = Methyl- oder Ethylrest, |
| a | = 0 bis 1,5, |
| b | = 1,0 bis 4,0, |
| a + b | = 2,0 bis 4,0, |

auswählt, diese kontinuierlich in einer dem Verbrauch entsprechenden Menge hydrolysiert und die erhaltene Lösung innerhalb einer Zeitspanne von 3 bis 30 Minuten nach Vermischen der Reaktionspartner auf den mineralischen Baustoff aufbringt.

Bei dieser Verfahrensweise erzielt man eine hohe Penetration der wäßrigen Zubereitungen in den mineralischen Baustoff, die mit der Penetration vergleichbar ist, die man bei der Verwendung lösungsmittelhaltiger Zubereitungen erreicht.

Diese wäßrigen Lösungen müssen jedoch, wie in der DE-PS 36 27 060 gefordert, aufgrund ihrer Lagerinstabilität am Ort ihrer Verwendung hergestellt werden.

In der veröffentlichten europäischen Patentanmeldung 0 234 024 ist für Zwecke der Hydrophobierung keramischen Materials eine wäßrige Silanemulsion beschrieben, welche im wesentlichen besteht aus

a) 1 bis 40 Gew.-% eines hydrolysierbaren Silans mit einem Molekulargewicht bis zu etwa 500 und der allgemeinen Formel $R_nSi(R')_{4-n}$ , wobei R ein gegebenenfalls halogenierter Kohlenwasserstoffrest mit 1 bis 20 C-Atomen, R' ein Alkoxyrest mit 1 bis 3 C-Atomen, ein Halogen-, Amino- oder Carboxylrest, n = 1 oder 2 ist, oder Oligomere dieser Silane und

b) 0,5 bis 50 Gew.-%, bezogen auf Silan, eines Emulgators mit einem HLB-Wert von 4 bis 15 und

c) Wasser.

Als besonders bevorzugtes Silan wird Octyltriethoxysilan genannt. Tatsächlich weisen Emulsionen derartiger Silane, bei denen der Rest R mehr als 6 Kohlenstoffatome aufweist, erhöhte Stabilität auf, da die Hydrolysegeschwindigkeit dieser reaktiven Silane herabgesetzt ist. Nachteilig ist jedoch, daß zwangsläufig auch die Hydrolyse dieser Silane im Baustoff entsprechend langsam erfolgt und in geeigneter Weise katalysiert werden muß. In einigen Baustoffen, wie frischem Beton, ist dies durch deren hohe Alkalität möglich. In neutralen oder schwach alkalischen Baustoffen, wie gebranntem Klinker und zahlreichen Natursteinen, ist dies jedoch nicht möglich. Ohne eine solche Katalyse erfolgt jedoch keine Verankerung der Silane an der Oberfläche des Baustoffes. Die Silane können von der Oberfläche verdunsten oder mechanisch entfernt werden. Dies führt zu einer Verarmung der Oberfläche an Silan und damit zu einer Verminderung der Hydrophobierung. Dies hat zur Folge, daß der Wasserabperleffekt schwach oder gar nicht vorhanden ist. Das Wasseraufnahmevermögen in der verarmten Oberflächenschicht ist hoch, so daß gerade diese der Witterung und dem mechanischen Angriff besonders ausgesetzte Schicht unzureichend geschützt ist. Diese Zubereitungen können somit nur bei bestimmten Baustoffen eingesetzt werden.

Der vorliegenden Erfindung liegt die Aufgabe zugrunde, eine wäßrige Zubereitung zur wasserabweisenden Imprägnierung poröser mineralischer Baustoffe bereitzustellen, die lagerstabil ist und auf allen in Frage kommenden sowohl alkalischen wie neutralen Baustoffoberflächen eine hohe wasserabweisende Wirkung aufweist.

Überraschenderweise finden sich diese Eigenschaften bei einer Zubereitung, welche erfindungsgemäß dadurch gekennzeichnet ist, daß sie aus einer Emulsion, enthaltend

2,5 bis 25 Gew.-% eines Alkoxysilans der allgemeinen Formel

$R^1\text{-}Si(OR^2)_3$

wobei

| | |
|---|---|
| $R^1$ | ein Alkylrest mit 3 bis 12 Kohlenstoffatomen und |
| $R^2$ | ein Methyl- oder Ethylrest ist, |

2 bis 20 Gew.-% eines Alkoxysiloxans der allgemeinen Formel

$$R^3_a\text{-}Si(OR^2)_b \atop {|\atop O_{\frac{4-(a+b)}{2}}}$$

wobei

- $R^3$ ein Alkylrest mit 1 bis 6 Kohlenstoffatomen,
- a = 0,8 bis 1,2 und
- b = 0,2 bis 1,2 ist,

0,01 bis 5 Gew.-% eines Emulgators,
0,01 bis 0,1 Gew.-% Füllstoffe mit einer wirksamen Oberfläche von mindestens 40 $m^2/g$ und
49,9 bis 95,48 Gew.-% Wasser,
besteht.

Der Rest $R^1$ des Alkoxysilans der Formel I ist ein Alkylrest mit 3 bis 12 Kohlenstoffatomen. Dieser Alkylrest kann geradkettig oder verzweigt sein. Beispiele solcher Alkylreste sind der Hexyl-, Octyl-, Nonyl-, Isononyl-, Decyl- und Dodecylrest. Bevorzugt sind geradkettige Alkylreste mit 3 bis 8 Kohlenstoffatomen, insbesondere bevorzugt solche mit 6 bis 8 Kohlenstoffatomen.

Der Rest $R^2$ ist in den allgemeinen Formeln I und II ein Methyl- oder Ethylrest. Aus physiologischen Gründen ist $R^2$ bevorzugt der Ethylrest, da bei der Hydrolyse in diesem Falle Ethanol freigesetzt wird.

Der Rest $R^3$ des Alkoxysiloxans der allgemeinen Formel II ist ein Alkylrest mit 1 bis 6 Kohlenstoffatomen. Der Alkylrest kann wiederum geradkettig oder verzweigt sein. Geeignete Reste $R^3$ sind der Methyl-, Ethyl-, Propyl-, Isopropyl-, Butyl-, Isobutyl- und der Hexylrest. Bevorzugt sind geradkettige Alkylreste mit 1 bis 4 Kohlenstoffatomen.

Der Index a, welcher die Anzahl der im durchschnittlichen Molekül der Formel II an das Si-Atom gebundenen Alkylreste wiedergibt, hat einen Wert von 0,8 bis 1,2, vorzugsweise 1,0.

Der Index b kennzeichnet die Anzahl der Alkoxygruppen je Siliciumatom im durchschnittlichen Molekül. Der Index b hat einen Wert von 0,2 bis 1,2. Die Summe von a + b soll innerhalb eines Bereiches von 1,2 bis 2,4 liegen.

Als Emulgatoren verwendet man im allgemeinen nichtionogene Emulgatoren, d.h. Anlagerungsprodukte von Alkylenoxiden, vorzugsweise Ethylenoxid, an Verbindungen mit acidem Wasserstoff, wie bevorzugt Fettalkohole, oder Alkylphenole, wie Octylphenol, Nonylphenol oder Dodecylphenol. Der Gehalt an Oxyethyleneinheiten soll dabei so groß sein, daß der HLB-Wert der Emulgatoren zwischen 6 und 14, insbesondere 8 und 12, liegt.

Auch ionische Emulgatoren sind verwendbar, wie z. B. Alkansulfonate.

Die erfindungsgemäße Zubereitung kann zusätzlich Katalysatoren enthalten. Sie werden zweckmäßigerweise unmittelbar vor Applikation der Zubereitung zugesetzt.

Als Katalysatoren verwendet man im allgemeinen Emulsionen organischer Metallverbindungen, wie z.B. Dibutylzinndilaurat. Die Verwendung von Katalysatoren ist jedoch nicht zwingend. Sie ist aber immer dann angebracht, wenn neutrale Baustoffe, wie gebrannter Klinker, behandelt werden sollen und die Wirksamkeit bereits nach kurzer Zeit voll entwickelt sein soll, z.B. weil die Wirksamkeitsprüfung schon nach 1 bis 2 Tagen erfolgen soll.

Die erfindungsgemäße Zubereitung wird vorzugsweise durch Vermischen einer Emulsion A, welche das Alkoxysilan enthält, mit einer Emulsion B, welche das Alkoxysiloxan enthält, hergestellt.

Die Herstellung der Emulsionen A und B kann in der Weise erfolgen, daß man das Alkoxysilan bzw. Alkoxysiloxan mit dem Emulgator vermischt und bei gegebenenfalls erhöhter Temperatur die benötigte Menge Wasser einbringt. Man kann auch zunächst eine kleine Menge, z.B. 5 bis 10 Gew.-%, Wasser, in der der Emulgator verteilt wird, vorlegen, das Silan bzw. Siloxan einrühren und die so erhaltene Stammemulsion mit dem restlichen Wasser verdünnen. Die Verwendung von Emulgiervorrichtungen, die z.B. nach dem Rotor/Stator-Prinzip arbeiten, oder die Verwendung von sogenannten Kolloid-Mühlen kann hilfreich sein und die Herstellung von Emulsionen besonderer Teilchenfeinheit ermöglichen.

Es ist aus dem Stand der Technik bekannt, daß man den Wasserabperleffekt derartiger Zubereitungen durch Zusatz von geeigneten Füllstoffen weiter verbessern kann. Diese Füllstoffe reichern sich an der Oberfläche des Baustoffes an und begünstigen die Hydrophobierung der Oberfläche. Vorzugsweise enthalten deshalb auch die Zubereitungen 0,01 bis 2 Gew.-%, vorzugsweise 0,01 bis 0,09 Gew.-%, (bezogen auf Zubereitung) Füllstoffe mit einer wirksamen Oberfläche von mindestens 40 $m^2/g$. Im allgemei-

nen und auch im Rahmen der Erfindung bevorzugt verwendet man hydrophobierte Kieselsäure, wie sie z.B. erhältlich ist, wenn man durch Flammhydrolyse erhaltene Kieselsäure mit siliciumorganischen Verbindungen, insbesondere Silanen, hydrophobiert.

Würde man die Emulsion A allein zur Imprägnierung poröser Baustoffe verwenden, zeigte diese die Nachteile der Zubereitungen gemäß der europäischen Patentanmeldung 0 234 024. Die Alkoxysilane (I) würden auf neutralem Untergrund nicht reagieren.

Bei alleiniger Verwendung der Emulsion B beobachtet man ein unzureichendes Penetrationsvermögen. Feinporige Baustoffoberflächen zeigen unzureichende wasserabweisende Wirkung.

Überraschenderweise wurde jedoch gefunden, daß die erfindungsgemäße Zubereitung lagerstabil ist und auf allen porösen mineralischen Baustoffoberflächen, also auch auf neutralem Untergrund, hohe wasserabweisende Wirkung aufweist. Tiefenwirkung durch hohe Penetration wird ebenso erreicht wie hohe hydrophobierende Wirksamkeit an der äußeren Oberfläche.

In den folgenden Beispielen wird die Herstellung und Zusammensetzung erfindungsgemäßer Zubereitungen beschrieben, und es werden die anwendungstechnischen Eigenschaften der erfindungsgemäßen Zubereitung, verglichen mit den Eigenschaften der Emulsion A und der Emulsion B jeweils alleine angewendet, gezeigt.

## Beispiel 1

Herstellung einer Emulsion

50 kg Wasser, das die gesamte Menge Emulgator (Gemisch sek. Alkansulfonate; CAS Reg. Nr. 68608-26-4) enthält, werden vorgelegt. 50 kg Alkylalkoxysilan/Alkylalkoxypolysiloxan (Wirkstoff) werden unter Rühren zugegeben. Anschließend wird viermal mit einem Spalthomogenisator bei 400/20 bar homogenisiert. Durch Kühlen wird die Temperatur bei 10 bis 20 ° C gehalten.

Vor der Verwendung wird die Emulsion mit Wasser auf den gewünschten Wirkstoffgehalt verdünnt.

Der angegebene Emulgatorgehalt bezieht sich stets auf den Wirkstoff.

Emulsion A

Wirkstoff: Octyltriethoxysilan
Emulgator: 5 Gew.-%

Emulsion B

Wirkstoff: Methylethoxypolysiloxan der Formel

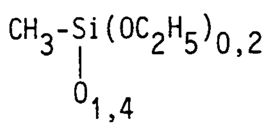

Emulgator: 5 Gew.-%

Emulsion C

Emulsion C wird durch Mischen der Emulsionen A und B hergestellt. Das Verhältnis von Emulsion A : Emulsion B beträgt 1 : 1.

Anwendungstechnische Prüfung

Die Ergebnisse der anwendungstechnischen Prüfung sind der Tabelle 1 zu entnehmen.

Tabelle 1

| Emulsion | Emulgator (Gew.-%) | Wirkstoff (Gew.-%) | Abperleffekt | Wasseraufnahme (Gew.-%) | Imprägniertiefe (mm) |
|---|---|---|---|---|---|
| A | 5 | 10 | 7 | 13,2 | 10 |
| B | 5 | 10 | 5 | 12,6 | 3 |
| C | 5 | 10 | 4 | 7,8 | 10 |
| unbehandelt | | | 7 | 15,5 | - |
| Substrat: Klinker | | | | | |

Beispiel 1 zeigt, daß die erfindungsgemäße Zubereitung aus Alkylalkoxysilan und Alkylalkoxypolysiloxan (Emulsion C) deutlich bessere Prüfergebnisse liefert als die nicht erfindungsgemäße Emulsion aus Alkylalkoxypolysiloxan (Emulsion B).

Die Prüfungen werden wie folgt durchgeführt:

Die 1 Woche im Normklima (20 °C/65 % r.F.) klimatisierten Prüfkörper (Klinker: 12 x 12 x 6 cm; Kalksandstein: Würfel mit 6 cm Kantenlänge) werden 60 Sekunden in die Imprägnierlösung getaucht und im Normklima getrocknet. Die Prüfung der Eigenschaften erfolgt wie üblich 1 Woche nach Imprägnierung.

Der Abperleffekt wird wie folgt bestimmt:

Auf die waagerechte Prüffläche wird mit einer Pipette 1 ml Leitungswasser vorsichtig aufgelegt. Nach 10 Minuten wird das noch aufstehende Wasser abgeschüttelt und die Kontaktfläche des Wassertropfens optisch beurteilt.

Es bedeuten:

1 keine Benetzung der Kontaktfläche
2 Kontaktfläche zu 50 % benetzt
3 Kontaktfläche zu 100 % benetzt
4 Wasser teilweise eingezogen; leichte Dunkelfärbung der Kontaktfläche
5 Wasser zu mindestens 50 % eingezogen; stärkere Dunkelfärbung der Kontaktfläche
6 Tropfen vollständig eingezogen; starke Dunkelfärbung der Kontaktfläche
7 Wassertropfen in weniger als 5 Minuten vollständig eingezogen

Die Wasseraufnahme wird wie folgt gemessen:

Die Prüfkörper werden für 24 Stunden unter Wasser (mit 5 cm überstehender Wassersäule) gelagert und anschließend herausgenommen, mit Filterpapier von äußerlich anhaftendem Wasser befreit und gewogen. Die Berechnung erfolgt nach folgender Formel:

Wasseraufnahme (Gew.-%) = (a - b) x 100 / b

a = Gewicht des Prüfkörpers nach Wasserlagerung
b = Gewicht des Prüfkörpers vor Wasserlagerung

Die Eindringtiefe (Imprägniertiefe) wird wie folgt bestimmt:

Die Prüfkörper werden gespalten und die Bruchflächen mit Wasser benetzt. Der helle Rand wird ausgemessen.

Beispiel 2

Gemeinsame Herstellung einer Emulsion aus Octyltriethoxysilan und Methylethoxypolysiloxan der Formel

$$\begin{array}{l} CH_3\text{-}Si(OC_2H_5)_{0,2} \\ \quad\;\; | \\ \quad\;\; O_{1,4} \end{array}$$

Die Wirkstoffe werden gemischt und gemeinsam, wie in Beispiel 1 beschrieben, emulgiert.

Emulsionen D bis F

Gewichtsverhältnis von Silan : Siloxan = 1 : 1
Die Emulsionen unterscheiden sich im Emulgatorgehalt (Tabelle 2).

Anwendungstechnische Prüfung

Die Prüfergebnisse können der Tabelle 2 entnommen werden.

Tabelle 2

| Emulsion | Emulgator (Gew.-%) | Wirkstoff (Gew.-%) | Abperleffekt | Wasseraufnahme (Gew.-%) | Imprägniertiefe (mm) |
|---|---|---|---|---|---|
| D | 5 | 10 | 4 | 7,2 | 10 |
| E | 0,45 | 10 | 3 | 2,0 | 10 |
| F | 0,1 | 10 | 2 | 0,6 | 10 |
| unbehandelt | | | 7 | 15,5 | - |
| Substrat: Klinker | | | | | |

Die Emulsionen D und E sind auch nach 12 Monaten Lagerung bei Raumtemperatur noch voll gebrauchstüchtig, während die Emulsion F nur etwa 6 Monate haltbar ist.

Beispiel 2 zeigt, daß die gemeinsame Herstellung einer Emulsion aus Alkylalkoxysilan und Alkylalkoxypolysiloxan (Emulsion D) hinsichtlich Abperleffekt und Wasseraufnahme zur Ergebnissen führt, die mit denen vergleichbar sind, die erhalten werden, wenn man die Emulsionen getrennt herstellt und vor Applikation mischt (Emulsion C). Darüber hinaus zeigt das Beispiel, daß durch Erniedrigung des Emulgatorgehaltes die Wirksamkeit deutlich gesteigert werden kann. Auch bei niedriger Emulgatorkonzentration liegt noch eine ausreichende Lagerstabilität vor.

Beispiel 3

Es wurde, wie in Beispiel 2 beschrieben, eine Emulsion aus Octyltriethoxysilan und Methylethoxypolysiloxan hergestellt. Diese Emulsion (Emulsion G) enthält jedoch 0,09 Gew.-% einer handelsüblichen hydrophoben Kieselsäure, bezogen auf Wirkstoff. Emulsion G wird anwendungstechnisch verglichen mit Emulsion F aus Beispiel 2.

Anwendungstechnische Prüfung

Die anwendungstechnische Prüfung ergibt die in Tabelle 3 wiedergegebenen Ergebnisse.

Tabelle 3

| Emulsion | Emulgator (Gew.-%) | Wirkstoff (Gew.-%) | Abperleffekt | Wasseraufnahme (Gew.-%) | Imprägniertiefe (mm) |
|---|---|---|---|---|---|
| G | 0,1 | 10 | 1 | 0,7 | 10 |
| F | 0,1 | 10 | 2 | 0,6 | 10 |
| unbehandelt | | | 7 | 15,5 | - |
| Substrat: Klinker | | | | | |

Beispiel 3 zeigt, daß durch Zusatz hydrophober Kieselsäure der Wasserabperleffekt deutlich erhöht werden kann, während Wasseraufnahme und Eindringtiefe des Imprägniermittels dadurch unbeeinflußt bleiben.

Beispiel 4

Der Emulsion E aus Beispiel 2 wird 1 Gew.-% einer 10 gew.-%igen Dibutylzinndilaurat-Emulsion zugesetzt. Der Gesamtgehalt an Katalysator in der anwendungsfertigen Emulsion H beträgt somit 0,1 Gew.-%. Die Emulsion H wird anwendungstechnisch verglichen mit Emulsion E aus Beispiel 2.

Anwendungstechnische Prüfung

Die anwendungstechnische Prüfung wird bereits nach 24 Stunden durchgeführt. Die Ergebnisse sind der Tabelle 4 zu entnehmen.

Tabelle 4

| Emulsion | Emulgator (Gew.-%) | Wirkstoff (Gew.-%) | Abperl-effekt | Wasserauf-nahme (Gew.-%) | Imprägnier-tiefe (mm) |
|---|---|---|---|---|---|
| Substrat: Klinker (neutraler Baustoff) | | | | | |
| H | 0,45 | 10 | 1-2 | 2,9 | 10 |
| E | 0,45 | 10 | 3-4 | 5,8 | 10 |
| unbehandelt | | | 7 | 15,5 | - |
| Substrat: Kalksandstein (alkalischer Baustoff) | | | | | |
| H | 0,45 | 10 | 2 | 1,8 | 5 |
| E | 0,45 | 10 | 2-3 | 1,9 | 5 |
| unbehandelt | | | 7 | 12,8 | - |

Beispiel 4 zeigt, daß auf neutralen Baustoffen, wie Klinker, durch Katalysatorzusatz eine verbesserte Wirksamkeit erreicht werden kann, vor allem dann, wenn die anwendungstechnische Prüfung bereits nach kürzerer Zeit erfolgen soll.

Beispiel 5

Emulsion K wird wie Emulsion E aus Beispiel 2 hergestellt, mit der sie anwendungstechnisch verglichen wird.

Anwendungstechnische Prüfung

Die Prüfergebnisse sind in Tabelle 5 dargestellt.

Tabelle 5

| Emulsion | Emulgator (Gew.-%) | Wirkstoff (Gew.-%) | Abperl-effekt | Wasserauf-nahme (Gew.-%) | Imprägnier-tiefe (mm) |
|---|---|---|---|---|---|
| K | 0,45 | 5 | 3 | 2,5 | 10 |
| E | 0,45 | 10 | 2-3 | 2,1 | 10 |
| unbehandelt | | | 7 | 15,5 | - |

Substrat: Klinker

Dieses Beispiel zeigt, daß auch ein verminderter Wirkstoffgehalt von nur 5 Gew.-% zu guter Imprägnierwirkung führen kann. Die Imprägiertiefe wird praktisch nicht beeinflußt.

Übersichtstabelle

| Beispiel Nr. | Emulsion Typ | Herstellung | Emulgator (Gew.-%) | Wirkstoff (Gew.-%) | $SiO_2$ (Gew.-%) | Dibutylzinn-dilaurat (Gew.-%) | Abperl-effekt | Wasserauf-nahme (Gew.-%) | Imprägnier-tiefe (Gew.-%) |
|---|---|---|---|---|---|---|---|---|---|
| 1 | A | - | 5 | 10 | - | - | 7 | 13,2 | 10 |
| 1 | B | - | 5 | 10 | - | - | 5 | 12,6 | 3 |
| 1 | C | 2 | 5 | 10 | - | - | 4 | 7,8 | 10 |
| 1 | - | - | - | - | - | - | 7 | 15,5 | - |
| 2 | D | 1 | 5 | 10 | - | - | 4 | 7,2 | 10 |
| 2 | E | 1 | 0,45 | 10 | - | - | 3 | 2,0 | 10 |
| 2 | F | 1 | 0,1 | 10 | - | - | 2 | 0,6 | 10 |
| 2 | - | - | - | - | - | - | 7 | 15,5 | - |
| 3 | G | 1 | 0,1 | 10 | 0,09 | - | 1 | 0,7 | 10 |
| 3 | F | 1 | 0,1 | 10 | - | - | 2 | 0,6 | 10 |
| 3 | - | - | - | - | - | - | 7 | 15,5 | - |

Übersichtstabelle (Fortsetzung)

| Beispiel Nr. | Emulsion Typ | Herstellung | Emulgator (Gew.-%) | Wirkstoff (Gew.-%) | $SiO_2$ (Gew.-%) | Dibutylzinndilaurat (Gew.-%) | Abperleffekt | Wasseraufnahme (Gew.-%) | Imprägniertiefe (Gew.-%) |
|---|---|---|---|---|---|---|---|---|---|
| 4* | H | 1 | 0,45 | 10 | - | 0,1 | 1-2 | 2,9 | 10 |
| 4* | E | 1 | 0,45 | 10 | - | - | 3-4 | 5,8 | 10 |
| 4* | - | - | - | - | - | - | 7 | 15,5 | - |
| 4** | H | 1 | 0,45 | 10 | - | 0,1 | 2 | 1,8 | 5 |
| 4** | E | 1 | 0,45 | 10 | - | - | 2-3 | 1,9 | 5 |
| 4** | - | - | - | - | - | - | 7 | 12,8 | - |
| 5 | K | 1 | 0,45 | 5 | - | - | 3 | 2,5 | 10 |
| 5 | E | 1 | 0,45 | 10 | - | - | 2-3 | 2,1 | 10 |
| 5 | - | - | - | - | - | - | 7 | 15,5 | - |

* Prüfung 24 Stunden nach Imprägnierung auf Klinker (verkürzte Härtungszeit)
** Prüfung 24 Stunden nach Imprägnierung auf Kalksandstein (verkürzte Härtungszeit)

Herstellung 1 = gemeinsame Emulgierung der Komponenten
2 = Mischen von Emulsion A und Emulsion B

## Patentansprüche

1. Zubereitung zur wasserabweisenden Imprägnierung poröser mineralischer Baustoffe auf der Basis von Alkoxygruppen enthaltenden siliciumorganischen Verbindungen, dadurch gekennzeichnet, daß sie aus

einer Emulsion, enthaltend
2,5 bis 25 Gew.-% eines Alkoxysilans der allgemeinen Formel

$R^1\text{-}Si(OR^2)_3$

wobei
$R^1$ ein Alkylrest mit 3 bis 12 Kohlenstoffatomen und
$R^2$ ein Methyl- oder Ethylrest ist,
2 bis 20 Gew.-% eines Alkoxysiloxans der allgemeinen Formel

$$\begin{array}{l} R^3_a\text{-}Si(OR^2)_b \\ \qquad | \\ \qquad O_{\frac{4-(a+b)}{2}} \end{array}$$

wobei
$R^3$ ein Alkylrest mit 1 bis 6 Kohlenstoffatomen,
a = 0,8 bis 1,2 und
b = 0,2 bis 1,2 ist,
0,01 bis 5 Gew.-% eines Emulgators,
0,01 bis 0,1 Gew.-% Füllstoffe mit einer wirksamen Oberfläche von mindestens 40 $m^2/g$ und
49,9 bis 95,48 Gew.-% Wasser, besteht.

**2.** Zubereitung nach Anspruch 1, dadurch gekennzeichnet, daß sie durch Vermischen einer Emulsion A, welche das Alkoxysilan enthält, mit einer Emulsion B, welche das Alkoxysiloxan enthält, erhältlich ist.

**3.** Zubereitung nach Anspruch 1 oder 2, dadurch gekennzeichnet, daß der Rest $R^2$ ein Ethylrest ist.

**4.** Zubereitung nach Anspruch 1 oder 2, dadurch gekennzeichnet, daß sie 0,01 bis 0,5 Gew.-% eines Emulgators enthält.

**Claims**

**1.** Formulation for the water-repellent impregnation of porous mineral building materials based on organosilicon compounds containing alkoxy groups, characterized in that it consists of an emulsion comprising
2.5 to 25 % by weight of an alkoxysilane of the general formula

$R^1\text{-}Si(OR^2)_3$

wherein
$R^1$ is an alkyl radical having 3 to 12 carbon atoms and
$R^2$ is a methyl or ethyl radical,
2 to 20 % by weight of an alkoxysiloxane of the general formula

$$\begin{array}{l} R^3_a\text{-}Si(OR^2)_b \\ \qquad | \\ \qquad O_{\frac{4-(a+b)}{2}} \end{array}$$

wherein
$R^3$ is an alkyl radical having 1 to 6 carbon atoms,
a = 0.8 to 1.2 and
b = 0.2 to 1.2,

0.01 to 5 % by weight of an emulsifier,
0.01 to 0.1 % by weight of fillers having an active surface area of at least 40 $m^2/g$ and
49.9 to 95.48 % by weight of water.

**2.** Formulation according to Claim 1, characterized in that it is obtainable by mixing an emulsion A which comprises the alkoxysilane with an emulsion B which comprises the alkoxysiloxane.

**3.** Formulation according to Claim 1 or 2, characterized in that the radical $R^2$ is an ethyl radical.

**4.** Formulation according to Claim 1 or 2, characterized in that it comprises 0.01 to 0.5 % by weight of an emulsifier.

**Revendications**

**1.** Préparation pour hydrofuger par imprégnation des matériaux de construction minéraux et poreux, à base de composés organiques du silicium, contenant des groupes alcoxy, caractérisée en ce qu'elle est constituée d'une émulsion contenant
2,5 à 25 % en poids d'un alcoxysilane de formule générale

$$R^1\text{-}Si(OR^2)_3$$

dans laquelle $R^1$ est un radical alkyle ayant de 3 à 12 atomes de carbone et $R^2$ est un radical méthyle ou éthyle,
2 à 20 % en poids d'un alcoxysilane de formule générale

$$\begin{array}{l} R_a^3\text{-}\underset{\displaystyle |}{Si}(OR^2)_b \\ \qquad O_{[4-(a+b)]/2} \end{array}$$

dans laquelle $R^3$ est un radical alkyle ayant de 1 à 6 atomes de carbone, a vaut de 0,8 à 1,2 et b vaut de 0,2 à 1,2,
0,01 à 5 % en poids d'un émulsifiant,
0,01 à 0,1 % en poids de charges ayant une aire active d'au moins 40 $m^2/g$, et
49,9 à 95,48 % en poids d'eau.

**2.** Préparation selon la revendication 1, caractérisée en ce qu'on peut la préparer en mélangeant une émulsion A contenant l'alcoxysilane à une émulsion B contenant l'alcoxysilane.

**3.** Préparation selon la revendication 1 ou 2, caractérisée en ce que le radical $R^2$ est un radical éthyle.

**4.** Préparation selon la revendication 1 ou 2, caractérisée en ce qu'elle contient de 0,01 à 0,5 % en poids d'un émulsifiant.